(19) Europäisches Patentamt / European Patent Office / Office européen des brevets

(11) **EP 3 580 434 B1**

(12) **EUROPEAN PATENT SPECIFICATION**

(45) Date of publication and mention
of the grant of the patent:
**27.08.2025  Bulletin 2025/35**

(21) Application number: **18751548.1**

(22) Date of filing: **24.01.2018**

(51) International Patent Classification (IPC):
**B23K 26/342** *(2014.01)*  **B22F 10/25** *(2021.01)*
**B22F 10/28** *(2021.01)*  **B22F 3/24** *(2006.01)*
**B22F 5/00** *(2006.01)*  **B22F 5/10** *(2006.01)*
**B22F 7/08** *(2006.01)*  **B23K 101/00** *(2006.01)*
**B33Y 10/00** *(2015.01)*  **B33Y 80/00** *(2015.01)*
**F01D 25/24** *(2006.01)*  **B23K 15/00** *(2006.01)*
**B23K 26/00** *(2014.01)*  **B23K 103/18** *(2006.01)*

(52) Cooperative Patent Classification (CPC):
**B22F 7/08; B22F 3/24; B22F 5/009; B22F 5/10;
B22F 10/25; B22F 10/28; B23K 15/0006;
B23K 15/0086; B23K 15/0093; B23K 26/0006;
B23K 26/342; B33Y 10/00; B33Y 80/00;
F01D 25/24;** B22F 10/22;                    (Cont.)

(86) International application number:
**PCT/US2018/014935**

(87) International publication number:
**WO 2018/148010 (16.08.2018 Gazette 2018/33)**

(54) **ANNULAR TURBINE ENGINE COMPONENT AND METHOD OF MANUFACTURING THE SAME**

RINGFÖRMIGES TURBINENBAUTEIL UND VERFAHREN ZU DESSEN HERSTELLUNG

COMPOSANT DE MOTEUR À TURBINE ANNULAIRE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.02.2017   US 201715426780**

(43) Date of publication of application:
**18.12.2019  Bulletin 2019/51**

(73) Proprietor: **General Electric Company
Schenectady, NY 12345 (US)**

(72) Inventors:
• **TORUN, Kerem**
  **41471 Gebze (TR)**
• **ONDER, Onur**
  **41470 Gebze (TR)**
• **COSKUN, Kemal**
  **Schenectady, NY 12345 (US)**
• **BERME, Banu**
  **41471 Gebze (TR)**
• **ARSLAN, Hulya**
  **41471 Gebze (TR)**
• **ISLIER, Bora**
  **41471 Gebze (TR)**

(74) Representative: **Hafner & Kohl PartmbB
Schleiermacherstraße 25
90491 Nürnberg (DE)**

(56) References cited:
EP-A1- 2 985 424        EP-A2- 3 034 228
DE-A1- 102015 120 786   US-A1- 2016 010 469
US-A1- 2016 052 057     US-A1- 2016 084 089
US-A1- 2016 214 211     US-A1- 2016 288 207
US-A1- 2017 002 978

(52) Cooperative Patent Classification (CPC): (Cont.)
B22F 10/60; B22F 2003/247; B23K 2101/001;
B23K 2103/26; F05D 2230/22; F05D 2230/25;
F05D 2230/31; Y02P 10/25

**Description**

INTRODUCTION

The disclosure relates to an improved method of producing components using a hybrid manufacturing technique. The disclosure provides an improved method of producing components for decreased tooling/manufacturing time, decreased cost, decreased waste of materials. Further, the disclosure provides an improved method of producing structurally optimized components for one more of the following characteristics: structural integrity, thermo-mechanical load carrying capability, buckling resistance, containment, and improved life of the component.

BACKGROUND

Gas turbine engines generally include at least one compressor and at least one turbine section each having rotating blades contained within an engine housing. One of the goals in designing an engine housing is to maintain a lightweight structure while still providing enough strength to contain any rotating blade that may break (i.e. blade containment). Because any broken blades must be contained within the housing, the walls of engine housings must be manufactured to ensure broken blades do not puncture the housing.

Proposals to reduce weight, strengthen the turbine case, and/or to decrease the cost and increase efficiency of manufacturing have relied on additive manufacturing (AM) techniques. When an annular structure for use in a turbine is manufactured, AM may be utilized to form an annular and/or cylindrical component at a net shape or at a near net shape for further finishing. AM techniques are advantageous during the manufacturing process of annular components, and other components, in that AM techniques offer high geometric flexibility and when compared to subtractive manufacturing techniques or casting techniques and further may offer cost savings and flexibility in enabling changes to be made during the production process without retooling. However, components manufactured using AM techniques may not exhibit the desired properties of materials formed using more conventional manufacturing techniques (e.g. forging). Further, during the abovementioned example process, the additively manufactured component is generally formed on a disposable or sacrificial and/or reusable base substrate. After the component is complete, the base substrate is removed, as the sole purpose of the base substrate is to provide a base and/or support for forming the AM component.

Background prior art is given in the following documents EP2985424, DE102015120786, EP3034228, US2017002978, and US2016010469A1.

SUMMARY OF THE INVENTION

The invention is defined by the subject-matter of the appended claims which are to be construed on basis of the description and drawings. Through the use of additive manufacturing techniques, an engine component may be formed on a base substrate, by employing the novel process to form a component discussed below, a component can be formed that incorporates the base material as part of the finished structure, thereby removing a manufacturing step from the process. Further, by employing the disclosed techniques, any one or combination of the advantages of: a reduction in material waste, a decrease in cost, and/or a decrease in manufacturing time are realized. The disclosed component and disclosed techniques further allow for components to be manufactured that utilize a hybrid structure, allowing the optimization of the structure of each portion of the component; accordingly, a component can be formed having the qualities of various materials and production processes at the locations of the component at which specific material qualities are desired. Additional advantages and novel features of these aspects will be set forth in part in the description that follows, and in part will become more apparent to those skilled in the art upon examination of the following or upon learning by practice of the disclosure.

BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.

FIG. 1 is a flow-chart depicting a method of forming a component in accordance with one aspect of the disclosure;

FIG. 2 is a side view and top view diagram of a conventional additive manufacturing technique used to form at least part of a component in accordance with one aspect of the disclosure;

FIG. 3 is a diagram of a conventional additive manufacturing technique used to form at least part of a component in accordance with one aspect of the disclosure;

FIG. 4 is schematic diagram showing an example of a conventional apparatus for additive manufacturing;

FIG. 5 is a top view depicting a base for forming a portion of a component in accordance with the present invention;

FIG. 6 is a side view depicting an additive manufacturing technique used to form at least a portion of the component on the example base of FIG. 6, in accordance with the present invention;

FIG. 7 is a side view depicting an additive manufacturing technique used to form at least a portion of the component on the example base of FIG. 6, in accordance with the present invention;

FIG. 8 is a perspective view depicting a component produced using a manufacturing technique in accordance with the present invention;

FIG. 9 is a perspective view depicting a component produced using a manufacturing technique in accordance with the present invention;

FIG. 10A is a cross-sectional view depicting a component showing a portion of the flange to be machined using a manufacturing technique in accordance with the present invention;

FIG. 10B is an enlarged cross-sectional view of the component in FIG. 11A, showing a portion of the flange to be machined using a manufacturing technique in accordance with the present invention;

FIG. 10C is an enlarged cross-sectional view of the component in FIG. 11A, showing a portion of the flange shown in FIG. 10B after machining in accordance with the present invention;

FIG. 11 is a perspective view of bosses formed using a manufacturing technique in accordance with the present invention;

FIG. 12 is a perspective view of a component having bosses formed using a manufacturing technique in accordance with the present invention;

DETAILED DESCRIPTION

Typically, turbine includes a compressor portion, a combustion portion, and a turbine portion. The turbine portion may include a gas generator turbine (GT) and a power turbine (PT). The majority of the description below describes an annular portion of an engine. Accordingly, the present invention may be applicable to any one of the turbine portions, the compressor portion or any other annular component of the turbine. The following detailed description sets a method of manufacturing an annular casing, and a produced annular engine casing as an example. The disclosed aspects may be implemented in the production of a high pressure turbine (HPT) or low pressure turbine (LPT), the high pressure compressor (HPC) or low pressure compressor (LPC), turbine center frame (TCF), and combustor, for example. The description should clearly enable one of ordinary skill in the art to make and use the manufacturing method and component, and the description sets forth several aspects, adaptations, variations, alternatives, and uses of the annular component, by way of example. The method of manufacturing the annular component described herein is applied to the construction of and resulting annular engine case

The abovementioned annular component, according to the present invention, is manufactured using an additive manufacturing (AM) technique, which is a wire fed additive manufacturing process The above mentioned additive manufacturing techniques is used to form an engine casing or annular component from stainless steel, aluminum, titanium, Inconel 625, Inconel 718, Inconel 188, cobalt chrome, among other metal materials or any alloy. For example, the above alloys may include materials with trade names, Haynes 188®, Haynes 625®, Super Alloy Inconel 625TM, Chronin® 625, Altemp® 625, Nickelvac® 625, Nicrofer® 6020, Inconel 188, and any other material having material properties attractive for the formation of annular components using the abovementioned techniques. AM processes generally involve the buildup of one or more materials to make a net or near net shape (NNS) object in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. As an example,

EP 3 580 434 B1

a particular type of AM process uses an energy beam, for example, an electron beam or electromagnetic radiation such as a laser beam, to sinter or melt a powder material and/or wire-stock, creating a solid three-dimensional object in which a material is bonded together.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. In general, the abovementioned processes are performed on build platform, which may be a reusable or sacrificial substrate. In the above-mentioned processes, conventionally, the build platform is removed from the component formed after a component build is complete.

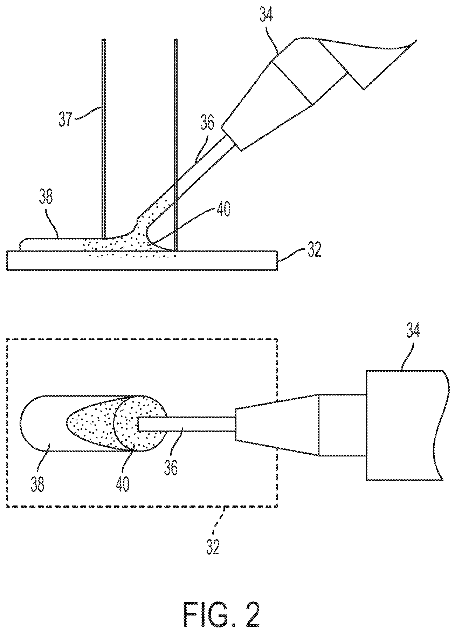

FIG. 2 is a schematic diagram showing an exemplary conventional wire fed AM apparatus and method. The apparatus may be configured to build objects, for example, a part 38, in a layer-by-layer manner by feeding wire-stock 36, fed by a wire feed apparatus 34, and sintering and/or melting the wire using an energy source 37, which may be, for example, an electron beam or electromagnetic radiation such as a laser beam. The building of the part 38, may be on a substrate 32. The energy source 37 may form a melt pool 40, which solidifies to form at least a portion of the part 38. Either the wire fed AM apparatus, the substrate, or both may be lowered and/or moved, while melting the wire-stock on any portion of the substrate 38 and/or on the previously solidified part 38 until the part is completely built up from a plurality of beads formed from the melted wire-stock. The energy source 37, may be controlled by a computer system including a processor and a memory. The computer system may determine a predetermined path for each melt pool and subsequently solidified bead to be formed, and energy source 37 to irradiate the wire material according to a pre-programmed path. After fabrication of the part 38 is complete, various post-processing procedures may be applied to the part 38. Post processing procedures include removal of excess melted wire-stock material, for example, by machining, sanding or media blasting. In the past, conventional post processing also involved removal of the part 38 from the build platform/substrate 32 through machining, for example. Other post processing procedures may include a stress release process, thermal and/or chemical post processing procedures to finish the part 38. As further examples, U.S. Patent Number 6,143,378 and U.S. Patent Number 8,546,717 describe conventional wire fed AM processes.

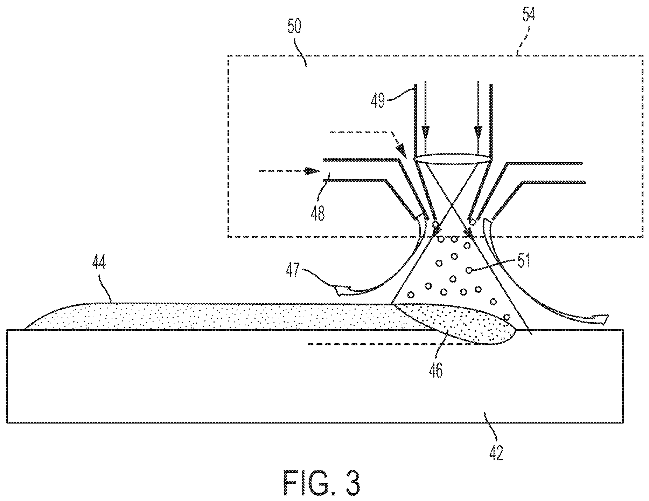

FIG 3 is a schematic diagram showing another exemplary conventional powder based system for building an AM component. The apparatus 55, is used to build components, for example, a part formed using stacked layers 44, by sintering or melting a powder material 52 fed though a nozzle by a powder feed source 50. The powder 52 is fed along with shield gas 47 though a shield gas source 48. As the powder is fed, the powder is melted into a melt pool 46 and/or sintered by an energy source 49. The energy source 49, may be provided, for example, as an electron beam or as electromagnetic radiation such as a laser beam. The building of the part 44, may be on a substrate 42. The melt pool 46, formed when the energy source melts and/or sinters the powder 51, solidifies to form at least a portion of the part 44. Either the powder fed AM apparatus, the substrate, or both may be lowered and/or moved, to melt the wire on any portion of the substrate 42 and/or on the previously solidified part 44 until the part is completely built up from a plurality deposited layers 44 built from melted powder 51. The energy source 49, may be controlled by a computer system including a processor and a memory. The computer system may determine a predetermined path for each melt pool and subsequently solidified bead to be formed, and energy source 49 to irradiate the powder material according to a pre-programmed path. After fabrication of the part 44 is complete, various post-processing procedures may be applied to the part 44. Post processing procedures include removal of excess powder, for example, by blowing or vacuuming, machining, sanding or media blasting. Further, conventional post processing may involve removal of the part 44 from the build platform/substrate 42 through machining, for example. The part may further be subject to a stress release process. Additionally, thermal and chemical post processing procedures can be used to finish the part 42.

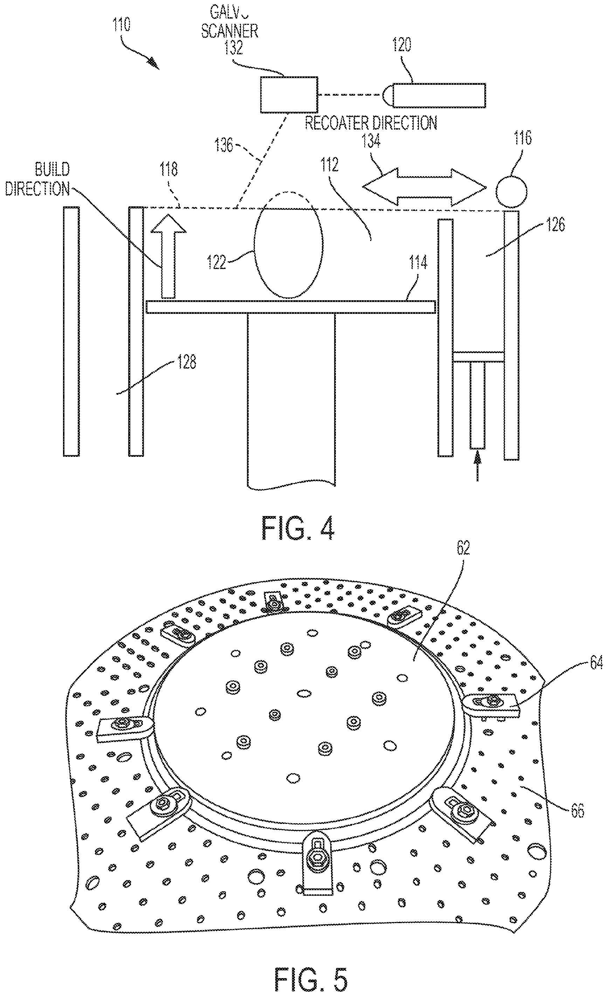

FIG. 4 is schematic diagram showing a cross-sectional view of an exemplary conventional system 110 for direct metal laser sintering (DMLS) or direct metal laser melting (DMLM). The apparatus 110 builds objects, for example, the part 122, in a layer-by-layer manner by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer of the object being built under control of the galvo scanner 132. The build plate 114 is lowered and another layer of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of excess powder, for example, by blowing or vacuuming, machining, sanding or media blasting. Further, conventional post processing may involve removal of the part 122 from the build platform/substrate through machining, for example. Other post processing procedures include a stress release process. Additionally, thermal and chemical post processing procedures can be used to finish the part 122.

Any of the abovementioned AM processes may be controlled by a computer executing a control program. For example, the apparatus 110 includes a processor (e.g., a microprocessor) executing firmware, an operating system, or other software that provides an interface between the apparatus 110 and an operator. The computer receives, as input, a three dimensional model of the object to be formed. For example, the three dimensional model is generated using a computer aided design (CAD) program. The computer analyzes the model and proposes a tool path for each object within the model. The operator may define or adjust various parameters of the scan pattern such as power, speed, and spacing, but generally does not program the tool path directly. One having ordinary skill in the art would fully appreciate the abovementioned control program may be applicable to any of the abovementioned AM processes. Further, the above-mentioned computer control may be applicable to any subtractive manufacturing or any pre or post processing techniques employed in any post processing or hybrid process.

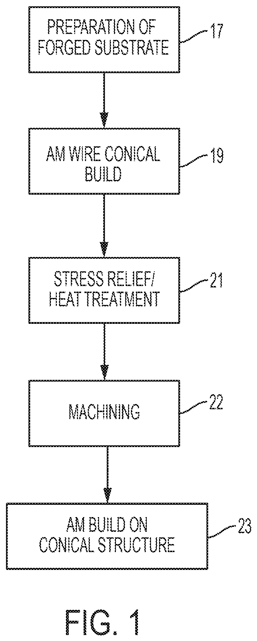

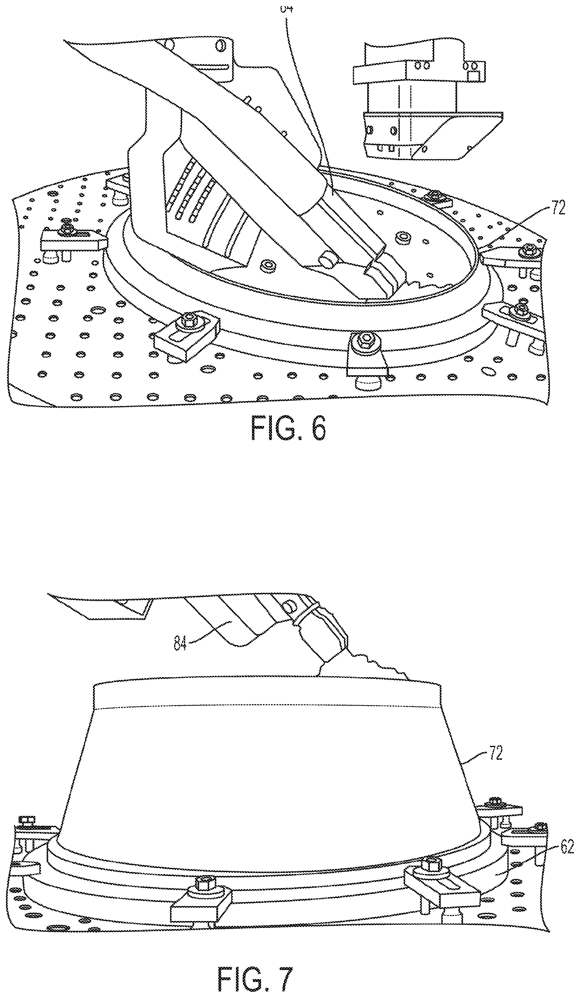

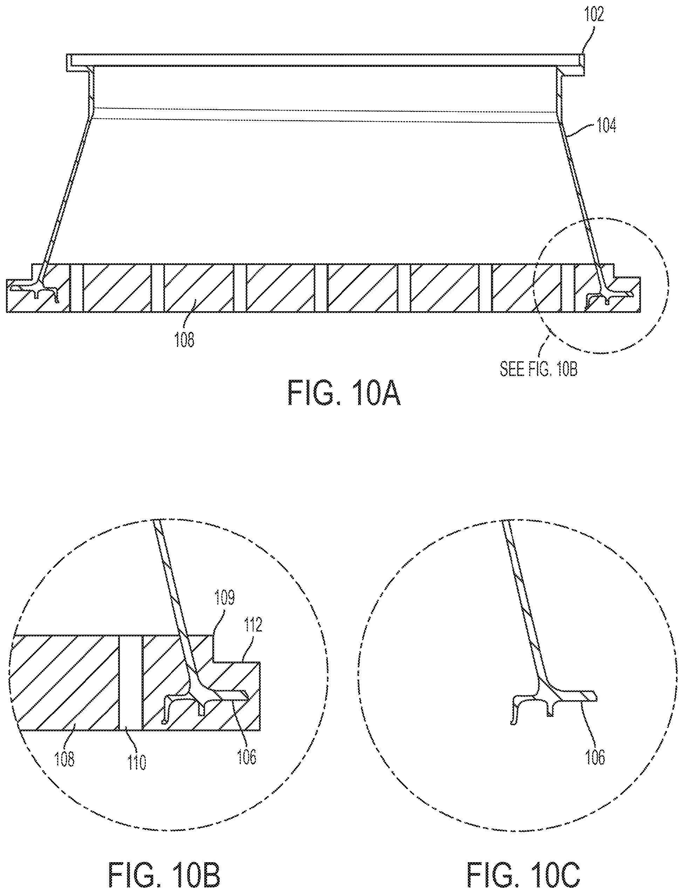

The flowchart in FIG. 1 depicts one aspect of the present invention. Reference 17 involves the selection or forming of a base substrate (an example of which is shown in FIG. 6). The base substrate may be formed of any suitable material. The base substrate 62, may be supplied as a raw material or may have any preparatory process applied. For example, the material may be sanded, media blasted, and/or may be prepared by machining, forging, and/or annealing. Further the base substrate may be chemically treated. The base substrate is further provided as a supplied forged substrate, and may be machined either before and/or after the below mentioned AM process is applied. For example, as shown in FIG. 6, the base substrate may be machined into a round base and may have at least a single machined step portion 64 for either clamping to a worksurface 66 or for forming a section of the desired geometry of the finished product. Further, the base substrate may be provided with an annular raised portion and/or a channel (not shown) which may correspond with the portion of the substrate at which an AM build is to be applied. The base portion 62 may further be drilled either to assist in mounting the substrate 62 to the base 66 and/or may be drilled for holes required on the finished part. The substrate 62 may further be machined or provided as a ring having a center opening (as shown in FIG. 10).

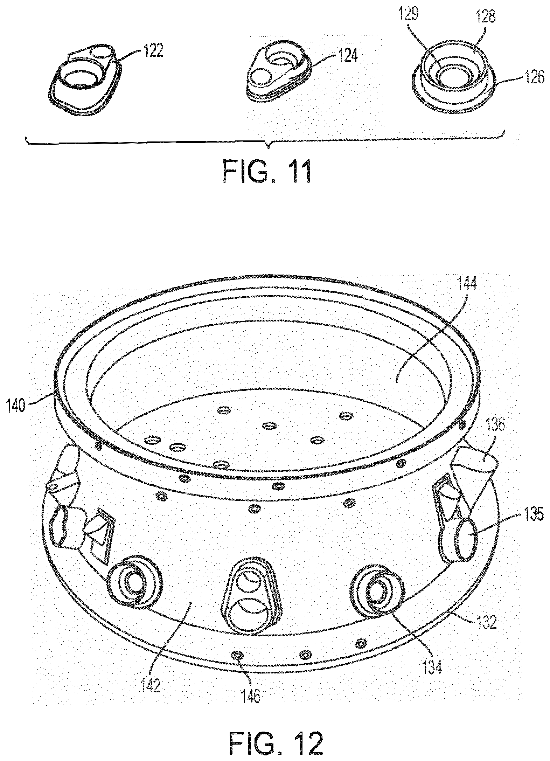

The base portion 66 may be pre-formed as a flange having any desired mounting holes, provisions, or portions to allow for sealing or mating of the flange with desired mating surfaces when completed component is assembled. The flange and/or base substrate 62 may be a material having optimal characteristics for the finished geometry associated with the base portion. For example, a flange portion may require the mechanical and material characteristics of a forged material (e.g. improved elongation, yield strength, ultimate tensile strength). Further the flange may subject to any processing to optimize the mechanical characteristics for use (e.g. hot working, cold working, annealing, and/or hardening). As shown in FIGs 11A and 11B, the base 108 substrate may be sourced or machined prior to an AM build to have at least one hole 110, and may be machined or forged to have a step portion 112. The base 108, may be selected and prepared in anticipation of a final machining of a flange portion 106.

As shown in reference 13 of FIG. 1, an AM technique may be applied to the substrate. According to the present invention the above mentioned laser wire AM process is applied to the base substrate to build the annular portion of the component. As shown in the example component depicted in FIGs. 6-8, the abovementioned AM process is used to form an annular portion of the component 72 on the base substrate 62. The annular portion of the component is formed layer by layer, either by rotation of the AM apparatus 84 and/or a rotation of the base portion 66. Further the base portion 66 and/or the AM apparatus 84 may be angled during the build process to form a second flange 140, an example of the second flange is shown in FIGs. 10 and 13. The annular portion, is not limited to, and may be formed of any of the abovementioned materials and formed using the above mentioned AM process An AM process is selected based on the desired cost, accuracy, repeatability, resolution, stability and/or mechanical properties of the build, and/or a desired build rate. When forming a large component having an annular structure, the above mentioned laser wire AM process provides the benefit of a faster and more efficient build at the expense of resolution and accuracy. The annular portion of the component formed using an AM process may exhibit material properties (e.g. yield strength, ultimate tensile strength, elongation) between a cast and a forged material, which may be desirable in terms of stresses the annular component is subjected to and/or the cost effectiveness of the completed component. The forged base portion 62, may be preferable as a flange, as a forged material may exhibit higher yield strength, higher ultimate tensile strength, elongation, and reduced porosity and/or cavities and voids throughout the material than the annular portion 72 formed using an AM process. Accordingly, by providing the base portion 62 as a portion of the finished component the advantages of both a forged material for the flange and an annular structure formed using an AM process may be realized, as one example.

Based on the above mentioned example, the yield strength at 600°C of the annular portion 72, represented by variable C, formed of the same material as the forged base material represented by variable X satisfies the following equation:

$$\text{Equation 1} \ldots\ldots\ldots\ldots\ldots\ldots\ldots\ldots\ldots\ldots\ldots\ldots\ldots\ldots\ldots\ldots\ldots\ldots\ldots\ldots C \leq 0.87X$$

Further, according to the present invention, the ultimate tensile strength at 600°C of the annular portion 72, represented by variable Y, formed of the same material as the forged base material represented by variable G satisfies the following equation:

$$\text{Equation 2} \ldots\ldots\ldots\ldots\ldots\ldots\ldots\ldots\ldots\ldots\ldots\ldots\ldots\ldots\ldots\ldots\ldots\ldots\ldots\ldots\ldots\ldots\ldots Y \leq 0.85G$$

Elongation at 600°C of the annular portion 72, represented by variable T, formed of the same material as the forged base material represented by variable F satisfies the following equation:

$$\text{Equation 3} \ldots\ldots\ldots\ldots\ldots\ldots\ldots\ldots\ldots\ldots\ldots\ldots\ldots\ldots\ldots\ldots\ldots\ldots\ldots\ldots\ldots\ldots T \leq 0.82F.$$

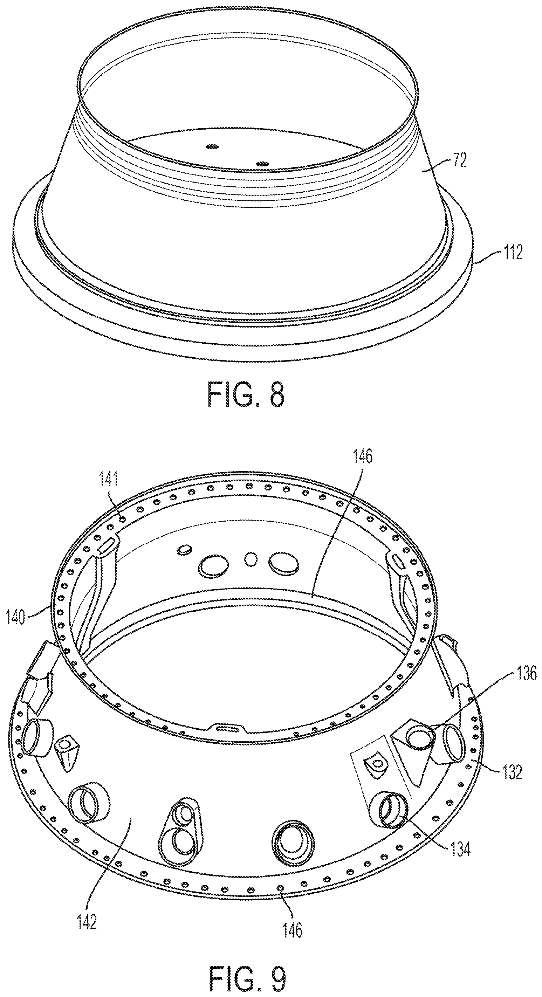

As shown in FIGs. 8, 9, 10, and 12, once a net shape AM process is performed on the base 62, 112, 108, the surface of the built AM portion of the component and/or the base may be subject to a stress relief and/or heat treatment process (FIG. 2, reference 21). Step 21 may include, annealing, stress relief annealing, thermal treatment, shot peening, vibratory stress relief, tempering, quenching, and/or any chemical process may be applied to the build. As shown in FIG. 2, step 22, the outer and/or inner annular structure may further be machined to remove any excess material imparted during the AM build process. The flange or base portion 62, 112, 108 may further be machined either before and/or after or during the machining of the annular AM portion 72 of the component.

As shown in reference 23 of FIG. 1, the annular surface 72 (FIG. 12, reference 142), further is subject to an additional AM process. The additional AM process is employed to form a portion of the component including at least a single or a plurality of bosses 134 or provisions 136. The bosses and/or provisions may be formed using a different AM process than the process used to form the annular portion 72, 142 of the component. The AM process in step 23 is selected based on the desired cost, accuracy, repeatability, resolution, stability and/or mechanical properties of the build, and/or a desired build rate of the portion of the component to be formed on the annular surface 72. According to the present invention, as shown in FIGs. 10, 12, and 13, a powder based AM process as described above and shown in FIG. 4 is employed to form bosses 122, 124, 135, 136, and provision 136. By employing the above mentioned powder based AM process, each boss may be formed with higher resolution and with greater accuracy than a wire based AM process, for example. Each boss includes a desired profile, which includes specific geometries in particular an outer flange 126, an inner flange 129 and a step portion 128. The bosses and/or provisions may further be subject to post processing after the AM process is complete. For instance, each of the bosses may include removal of excess powder, for example, by blowing or vacuuming, machining, sanding or media blasting. Other post processing procedures may include a stress release process. Additionally, thermal and chemical post processing procedures can be used to finish any one of the above mentioned bosses and/or provisions.

## Claims

1.　An annular turbine engine component, comprising:

　　a forged base formed of a forged material having a yield strength at 600°C represented by X;
　　a metallic conical portion formed by a wire fed additive manufacturing process and joined with the forged base, the metallic conical portion formed of a material having a yield strength at 600°C represented by C, wherein the equation C ≤ 0.87X is satisfied, wherein the metallic conical portion (72) is formed of the same material as the forged base (62);
　　wherein the annular turbine engine component is an annular engine case;
　　wherein the metallic conical portion has at least one boss formed on a surface via a powder-based AM process, the at least one boss having an outer flange (126), an inner flange (129), and an annular step portion (128) extending outwardly from the surface;
　　wherein the forged base has an ultimate tensile strength at 600°C represented by G, and the metallic conical portion has an ultimate tensile strength at 600°C represented by Y, wherein the equation Y ≤ 0.85G is satisfied; and
　　wherein the forged base has an elongation at 600°C represented by F, and the metallic conical portion has an elongation at 600°C represented by T, wherein the equation T ≤ 0.82F is satisfied.

2.　The annular turbine engine component of claim 1, wherein the forged base is an annular ring.

3.　The annular turbine engine component of claim 2, wherein the forged base comprises a first flange portion (106) and the metallic conical portion comprises a second flange portion.

4. A method of producing an annular turbine engine component according to any of claims 1 - 3, comprising:
using a first additive manufacturing process to form an annular structure on a forged base plate, the first additive manufacturing process comprising:

feeding a source wire and irradiating the source wire with an energy source (37) to form a melt pool (40) on a first surface of the forged base plate;
moving at least one of the source wire and energy source (37), and the forged base plate while irradiating the source wire with an energy beam to form a first growth surface on the first surface;

(a) moving at least one of the source wire and energy source (37); and the forged base plate while irradiating the source wire to form a melt pool (40) on a previously solidified growth surface;
(b) repeating step (a) until an additively manufactured annular structure is formed on the forged base plate, wherein both the forged base plate and additively manufactured annular structure become at least a portion of the finished turbine engine component,

further comprising:
subjecting at least one surface of the annular structure to a second additive manufacturing process, the second process comprising steps of:

(a) irradiating a layer of powder (51) with an energy beam in a series of scan lines to form a fused region;
(b) providing a subsequent layer of powder; and
(c) repeating steps (a) and (b) until a third portion is formed on the at least one surface of the annular structure.

5. The method of producing the turbine engine component of claim 4, further comprising:
machining the forged base plate to form an annular flange (106), wherein the forged base plate is machined after the annular structure is formed on the forged base plate.

6. The method of producing the turbine engine component of claim 4, further comprising:
machining the forged base plate to form an annular flange (106), wherein the forged base plate is machined before the annular structure is formed on the base plate.

7. The method of producing the turbine engine component of claim 4, wherein the annular structure has a central axis and has at least one inner surface and an outer surface, wherein the inner surface is closer to the central axis than the outer surface; the method further comprising steps of:
machining the outer surface and the forged base plate so that a first annular outer surface is formed, wherein the first annular outer surface is formed as an uninterrupted annular surface extending from the additively manufactured annular structure through at least a first portion of the forged base plate.

8. The method of producing the turbine engine component of claim 6, wherein the method further comprises forming a provision on the annular structure with a powder fed additive manufacturing process.

**Patentansprüche**

1. Eine ringförmige Turbinentriebwerkskomponente, bestehend aus:

eine geschmiedete Basis aus einem geschmiedeten Material mit einer Streckgrenze bei 600 °C, dargestellt durch X;
ein metallischer konischer Abschnitt, der durch ein drahtgespeistes additives Herstellungsverfahren gebildet und mit der geschmiedeten Basis verbunden ist, der metallische konische Abschnitt, der aus einem Material mit einer Streckgrenze bei 600 °C, dargestellt durch C, gebildet ist, wobei die Gleichung $C \leq 0{,}87X$ erfüllt ist, wobei der metallische konische Abschnitt (72) aus demselben Material wie die geschmiedete Basis (62) gebildet ist;
wobei die ringförmige Turbinentriebwerkskomponente ein ringförmiges Triebwerksgehäuse ist;
wobei der metallische konische Abschnitt mindestens einen Boss aufweist, der über ein pulverbasiertes AM-Verfahren auf einer Oberfläche ausgebildet ist, wobei der mindestens eine Boss einen äußeren Flansch (126), einen inneren Flansch (129) und einen ringförmigen Schrittabschnitt (128) aufweist, der sich nach außen von der Oberfläche erstreckt;

wobei die geschmiedete Basis eine endgültige Zugfestigkeit bei 600 °C, dargestellt durch G, und der metallische konische Teil eine endgültige Zugfestigkeit bei 600 °C, dargestellt durch Y, aufweist, wobei die Gleichung $Y \leq 0{,}85$ G erfüllt ist; und

wobei die geschmiedete Basis eine Dehnung bei 600°C aufweist, dargestellt durch F, und der metallische konische Abschnitt eine Dehnung bei 600°C aufweist, dargestellt durch T, wobei die Gleichung $T \leq 0{,}82°F$ erfüllt ist.

2. Ringturbinentriebwerkskomponente nach Anspruch 1, wobei die geschmiedete Basis ein Ring ist.

3. Ringturbinentriebwerkskomponente nach Anspruch 2, wobei die geschmiedete Basis einen ersten Flanschabschnitt (106) und der metallische konische Abschnitt einen zweiten Flanschabschnitt umfasst.

4. Verfahren zur Herstellung eines ringförmigen Turbinenmotorbauteils nach einem der Ansprüche 1 bis 3, umfassend: unter Verwendung eines ersten additiven Herstellungsverfahrens zur Bildung einer ringförmigen Struktur auf einer geschmiedeten Grundplatte, wobei das erste additive Herstellungsverfahren Folgendes umfasst:

Einspeisung eines Quelldrahtes und Bestrahlung des Quelldrahtes mit einer Energiequelle (37) zur Bildung eines Schmelzbades (40) auf einer ersten Oberfläche der geschmiedeten Grundplatte;

Bewegen mindestens eines Quelldrahts und einer Energiequelle (37) und der geschmiedeten Grundplatte, während der Quelldraht mit einem Energiestrahl bestrahlt wird, um eine erste Wachstumsfläche auf der ersten Oberfläche zu bilden;

a) Bewegen von mindestens einem der Ausgangsleitungen und der Energiequelle (37); und die geschmiedete Grundplatte, während der Quelldraht bestrahlt wird, um einen Schmelzpool (40) auf einer zuvor erstarrten Wachstumsfläche zu bilden;

b) Wiederholungsschritt (a) bis eine additiv hergestellte ringförmige Struktur auf der geschmiedeten Grundplatte gebildet wird, wobei sowohl die geschmiedete Grundplatte als auch die additiv hergestellte ringförmige Struktur mindestens einen Teil des fertigen Turbinenmotorbauteils bilden,

ferner umfassend:

bei dem mindestens eine Oberfläche der ringförmigen Struktur einem zweiten additiven Fertigungsverfahren unterzogen wird, wobei das zweite Verfahren folgende Schritte umfasst:

a) Bestrahlung einer Pulverschicht (51) mit einem Energiestrahl in einer Reihe von Abtastlinien zu einem verschmolzenen Bereich;

b) Bereitstellung einer nachfolgenden Pulverschicht; und

c) Wiederholen der Schritte (a) und (b) bis ein dritter Abschnitt auf der mindestens einen Oberfläche der ringförmigen Struktur gebildet ist.

5. Verfahren zur Herstellung der Turbinentriebwerkskomponente nach Anspruch 4, ferner umfassend: Bearbeitung der geschmiedeten Grundplatte zu einem Ringflansch (106), wobei die geschmiedete Grundplatte bearbeitet wird, nachdem die ringförmige Struktur auf der geschmiedeten Grundplatte gebildet wurde.

6. Verfahren zur Herstellung der Turbinentriebwerkskomponente nach Anspruch 4, ferner umfassend: Bearbeitung der geschmiedeten Grundplatte zu einem Ringflansch (106), wobei die geschmiedete Grundplatte bearbeitet wird, bevor die Ringstruktur auf der Grundplatte gebildet wird.

7. Verfahren zur Herstellung der Turbinenmotorkomponente nach Anspruch 4, wobei die ringförmige Struktur eine Mittelachse und mindestens eine Innenfläche und eine Außenfläche aufweist, wobei die Innenfläche näher an der Mittelachse als die Außenfläche liegt; das Verfahren, das ferner folgende Schritte umfasst: Bearbeitung der Außenfläche und der geschmiedeten Grundplatte, so dass eine erste ringförmige Außenfläche gebildet wird, wobei die erste ringförmige Außenfläche als eine ununterbrochene ringförmige Oberfläche ausgebildet ist, die sich von der additiv hergestellten ringförmigen Struktur durch mindestens einen ersten Abschnitt der geschmiedeten Grundplatte erstreckt.

8. Verfahren zur Herstellung der Turbinentriebwerkskomponente nach Anspruch 6, wobei das Verfahren ferner das Herstellen einer Bestimmung über die ringförmige Struktur mit einem pulvergefütterten additiven Fertigungsverfahren umfasst.

**Revendications**

1. Un composant de moteur à turbine annulaire, comprenant:

   une base forgée constituée d'un matériau forgé ayant une limite d'élasticité à 600 °C représentée par X;
   une partie conique métallique formée par un procédé de fabrication additive à fil et jointe à la base forgée, la partie conique métallique formée d'un matériau ayant une limite d'élasticité à 600 °C représentée par C, dans laquelle l'équation $C \leq 0,87X$ est satisfaite, dans laquelle la partie conique métallique (72) est formée du même matériau que la base forgée (62);
   dans laquelle l'élément moteur à turbine annulaire est un boîtier de moteur annulaire;
   dans laquelle la partie conique métallique a au moins un bosse formé sur une surface par un procédé AM à base de poudre, l'au moins un bosse ayant une bride extérieure (126), une bride intérieure (129) et une partie de marche annulaire (128) s'étendant vers l'extérieur à partir de la surface;
   dans laquelle la base forgée a une résistance maximale à la traction à 600 °C représentée par G, et la partie conique métallique a une résistance maximale à la traction à 600 °C représentée par Y, dans laquelle l'équation $Y \leq 0,85G$ est satisfaite; et
   où la base forgée a un allongement à 600 °C représenté par F, et la partie conique métallique a un allongement à 600 °C représenté par T, où l'équation $T \leq 0,82F$ est satisfaite.

2. Le composant moteur à turbine annulaire de la revendication 1, dans lequel la base forgée est un anneau annulaire.

3. Le composant moteur à turbine annulaire de la revendication 2, dans lequel la base forgée comprend une première partie de bride (106) et la partie conique métallique comprend une deuxième partie de bride.

4. Méthode de production d'un composant de moteur à turbine annulaire selon l'une quelconque des revendications 1 à 3, comprenant:
   utilisant un premier procédé de fabrication additive pour former une structure annulaire sur une plaque de base forgée, le premier procédé de fabrication additive comprenant:

   alimentant un fil source et irradiant le fil source avec une source d'énergie (37) pour former une piscine de fusion (40) sur une première surface de la plaque de base forgée;
   déplacer au moins un fil source et une source d'énergie (37) et la plaque de base forgée tout en irradiant le fil source avec un faisceau d'énergie pour former une première surface de croissance sur la première surface;

   a) déplacer au moins un fil source et une source d'énergie (37); et la plaque de base forgée lors de l'irradiation du fil source pour former une masse fondue (40) sur une surface de croissance préalablement solidifiée;
   b) répéter l'étape a) jusqu'à ce qu'une structure annulaire fabriquée additivement soit formée sur la plaque de base forgée, dans laquelle la plaque de base forgée et la structure annulaire fabriquée additivement deviennent au moins une partie de l'élément fini du moteur à turbine,

   comprenant en outre:
   soumettant au moins une surface de la structure annulaire à un second procédé de fabrication additive, le second comprenant les étapes suivantes:

   a) irradiant une couche de poudre (51) avec un faisceau d'énergie dans une série de lignes de balayage pour former une région fusionnée;
   b) fournir une couche ultérieure de poudre; et
   c) répéter les étapes a) et b) jusqu ' à ce qu' une troisième partie se forme sur au moins une surface de la structure annulaire.

5. La méthode de production de l'élément moteur à turbine de la revendication 4, comprenant en outre:
   usinage de la plaque de base forgée pour former une bride annulaire (106), dans laquelle la plaque de base forgée est usinée après la formation de la structure annulaire sur la plaque de base forgée.

6. La méthode de production de l'élément moteur à turbine de la revendication 4, comprenant en outre:

usinage de la plaque de base forgée pour former une bride annulaire (106), dans laquelle la plaque de base forgée est usinée avant que la structure annulaire ne soit formée sur la plaque de base.

7. Méthode de production du composant moteur à turbine de la revendication 4, dans laquelle la structure annulaire a un axe central et a au moins une surface intérieure et une surface extérieure, dans laquelle la surface intérieure est plus proche de l'axe central que la surface extérieure; la méthode comprenant en outre les étapes suivantes:
   usinage de la surface extérieure et de la plaque de base forgée de manière à former une première surface extérieure annulaire, dans laquelle la première surface extérieure annulaire est formée comme une surface annulaire ininterrompue s'étendant de la structure annulaire fabriquée additivement à travers au moins une première partie de la plaque de base forgée.

8. La méthode de production du composant moteur à turbine de la revendication 6, dans laquelle la méthode comprend en outre la formation d'une disposition sur la structure annulaire avec un procédé de fabrication additive alimenté par poudre.

```
PREPARATION OF          17
FORGED SUBSTRATE

        ↓

AM WIRE CONICAL         19
    BUILD

        ↓

STRESS RELIEF/          21
HEAT TREATMENT

        ↓

   MACHINING            22

        ↓

  AM BUILD ON           23
CONICAL STRUCTURE
```

FIG. 1

FIG. 2

FIG. 3

FIG. 4

FIG. 5

FIG. 6

FIG. 7

FIG. 8

FIG. 9

FIG. 10A

FIG. 10B

FIG. 10C

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2985424 A
- DE 102015120786
- EP 3034228 A
- US 2017002978 A
- US 2016010469 A1
- US 4863538 A
- US 5460758 A
- US 6143378 A
- US 8546717 B